# EUROPEAN PATENT SPECIFICATION

(11) **EP 0 388 376 B1**
(45) Date of publication and mention of the grant of the patent: **20.11.1996**
(21) Application number: 90830106.2
(22) Date of filing: 15.03.1990
(51) Int. Cl.: B23K 9/06

(54) **Welding apparatus of the tungsten inert gas (t.i.g.) type with digital control of the welding cycle**
WIG Schweissvorrichtung mit digitaler Regelung des Schweisszyklusses
Dispositif de soudage à tungstène et à gaz inerte avec réglage numérique de cycle de soudage

(30) Priority: 16.03.1989 IT 4774989
(43) Date of publication of application: 19.09.1990
(73) Proprietor: Ente per le nuove tecnologie, l'energia e l'ambiente ( ENEA), I-00198 Roma (IT)
(72) Inventor: Presaghi, Massimo, I-00166 Roma (IT); Romanello, Francesco, I-00159 Roma (IT); Manzi, Giovanni, I-00148 Roma (IT)
(74) Representative: Sarpi, Maurizio

(56) References cited:
- DE-A- 1 913 705
- US-A- 4 650 957
- PATENT ABSTRACTS OF JAPAN vol. 7, no. 85 (M-206)(1230), 9 April 1983; & JP-A-589769 (OOSAKA HENATSUKI K.K.) 20.01.1983

## Description

The present invention concerns an apparatus with digital control for the automatic arc welding which is protected by inert gas (T.I.G.). It allows to realize:
a) spotlike microweldings such as, for instance, on hot junctions of small diameter thermocouples which are protected by metal sheaths;
b) at circumferential microwelds such as, for instance, between small diameter through leads and thin metal sheath;
c) of precision welding on thin sheets and on little pieces while keeping under control the pertaining parameters. It allows also to effect welding programs, anyhow complex which could be laid down also by computers with wide evolutions of current (150 mA - 30 A) with uninterrupted continuity.

Such apparatus is known from US-A-4650957.

In Italian Patent 845.115 of the same applicant an automatic arc welding apparatus has been made known, protected by inert gas, for the programmed execution of microwelds, specifically for making hot junctions of sheathed thermocouples. Such welding apparatus was characterized by comprising:
a means for generating ionisation high voltage (that is 5000 V, 1500 HZ) for striking the arc,
a means adapted for mixing the striking voltage and the arc voltage which means can maintain the striking voltage superimposed to the power discharge and to automatically exclude it at the striking of the arc,
a programming means adapted for carrying out several welding predeterminable programs,
a means for simultaneously adjusting the initial peak current and the arc discharge current as a function of the intrinsic resistance of the component to be welded.

The potentiality of operating with very low arc currents, of making the weldings of hot junctions repeatable, the absence of mechanical means in movement, the non existency of moving mechanical means, the opportunity of predisposing fixed programs to fit the discharge time, have provided an ample industrial spreading for such welding machine both in Italy and abroad. However its characteristics and performances do not meet any more the modified to day work requirements: the welding currents of to day weld apparatuses are included within an interval (from 0,5 A to 6 A) which is too limited with respect to the ample size of the potential applications. Furthermore to day welding cycles are required with ample current evolutions with no interruptions.

Another specific requirement is to standardize the welding procedures and making them repeatable whereby the produced work can be certified.

A further problem to be solved is to make the welding apparatus indifferent to the changes of line impedance caused by the cables, the piece being worked and the distance from the electrode to the piece being worked.

A purpose of the present invention is to obviate the mentioned drawbacks and to satisfy the above requirements by:
a) amplifying the interval of the weld current whereby a very high linearity, a continuity, a repeatability and a total programmability of the weld cycle are attained;
b) imparting to the weld apparatus an optimum electric efficiency which is an important object for the concerned power;
c) allowing the interfacing and then the checking by a P.C. of the welding apparatus actions and of the weld parameters;
d) imparting to the apparatus the capacity for possible future extensions of its operating ability.

### SHORT DESCRIPTION OF THE INVENTION

The above results have been achieved through the present invention by providing a welding apparatus wherein:
1. The welding current is piloted by an analog programmer which commands the evolution of the current as per the program which can be laid down each time. This particular aspect to which the characteristics are added of linearity, continuity and repeatability allows, as an alternative, to use a common P.C. which through a suitable interface and a suitable analog to digital converter can operate in the same way whereby the filing of the behaviour of the current with time so that an effective certification of the effected welding can be constituted.
   All the above, allows a more elevated repeatability of the weld parameters whereby the standardization and the optimization of particular welding techniques are allowed.
2. The weld current is checked by a counterreaction ring circuit effective for detecting the impedances of line and automatically compensating for the fluctuations of impedance of the arc.
3. The electric efficiency is optimized by using a generator with an automatic checking of the voltage across the current regulator whereby the voltage is maintained within the safety limits. Where the voltage overcomes one of the two thresholds either minimum or maximum the control system provides to take back such voltage within said limits by connecting and disconnecting a certain number of supply transformers.

This allows an optimization of the exploitment of the current generator with the consequent increase of efficiency. Further advantages and characteristics of the invention will appear clearly from the following description while making a reference to the annexed tables of drawings wherein:
- Fig. 1 is a block diagram of the whole apparatus;
- Fig. 2 is a diagram of the voltages of the current which voltages are contained within the safety limits of the regulating system;
- Fig. 3 is a flux diagram which shows the logic whereby the voltage is regulated which is produced by the voltage generator;
- Fig. 4 is the diagram of the relay for connecting/disconnecting the transformers of block 1 and increasing or decreasing the voltage;
- Fig. 5 shows the circuit, which is simplified for a better understanding, which realizes the two decisional units (block 6) which are trasferred on the diagram of Fig. 3;
- Fig. 6 is a diagram of the regulating circuit with a counterreaction ring;
- Fig. 7 reports examplifying graphs of spurious signals of the weld signal and of the electronic noise;
- Fig. 8 is a flux diagram which shows the logic for transmitting to the weld programmer the control time of the program beginning;
- Fig. 9 is a flux diagram which represents the cycle for cheeking the current for the protection of the mixer;
- Fig. 10 shows the subdivision of times in the cycle for checking the electrovalve (block 10) by which argon is intercepted;
- Fig. 11 is a diagram of the voltage checking circuit (block 11);
- Fig. 12 shows: the circuit of block 8, conditioner, and pilot of the weld current and of the current regulator; the circuit of filter for unwanted signals (block 12) which is integrated with block 11, detector of current, the circuits for checking the ΔV and block 15 detector of current with temporizer 16;
- Fig. 13 shows the circuit of the dissipator 3;
- Fig. 14 shows the circuit of the mixer (block 14) and of H.T. generator (block 7);
- Fig. 15 illustrates the connection of high voltage generator in the power circuit;
- Fig. 16 is a block diagram of the programmer which pilots the welding current;
- Fig. 17 shows the electronic circuit of the interface for the P.C.

### BLOCKS DIAGRAM AND OPERATION OF THE SYSTEM

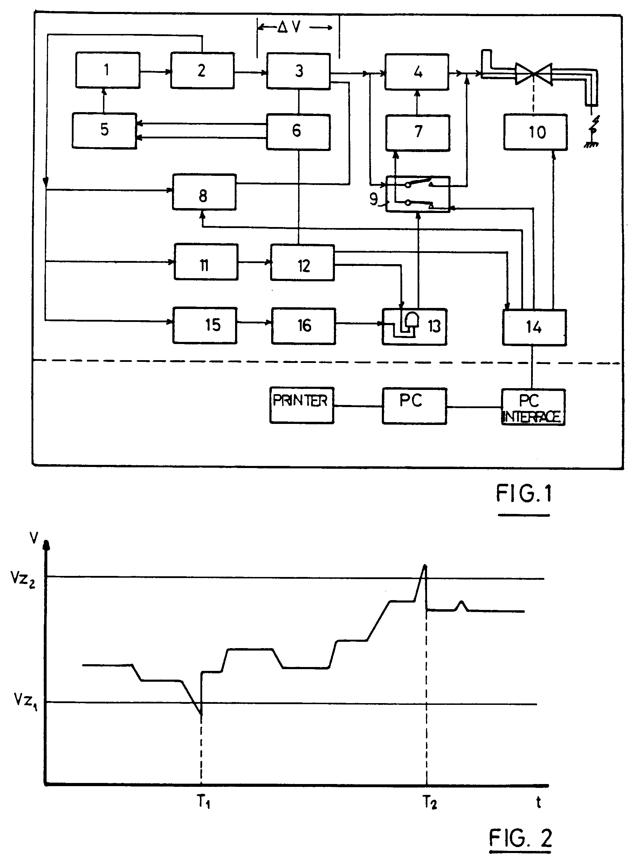

With reference to Fig. 1 which shows the block diagram of the apparatus, 1 is the generator block of variable voltage, 2 is the current meter, 3 is the current regulator, 4 is the mixer of the striking voltage and of the arc voltage, 5 represents the logic for regulating the voltage, 6 represents the checking of the voltage as generated by block 1, by 7 the generator H.T. is indicated, 8 is the conditioner of the weld current, 9 is a relay, 10 is an electrovalve which intercepts the argon flux, 11 is a detector of the weld current, 12 is a noise discriminator, 13 is the mixer protecting block, 14 is the weld programmer, 15 is the detector of the arc current, 16 is a timing relay.

The variable voltage generator, block 1, feeds, through the current meter, block 2, the current regulator (block 3). The power outlet of block 3 is sent to mixer (block 4) which, in the case of currents higher then 5A is short circuited by relay 9 which at its turn is controlled by protection circuit of the mixer (block 13). Relay 9 actuates also a contact which excludes HT generator (block 7) which is no more useful.

From the latter element the current reaches the weld electrode.

The weld programmer 14 with its evolving trend imposes the current delivered by block 3.

The checking of the weld current is committed to the conditioner of weld current (block 8) which is reached by programmer signals (block 14) and by converter current/voltage (block 2).

Block 8 compares these signals and the difference between the two, suitably processed, operates on block 3 whereby on the latter a current outlet is determined equal to the desired value.

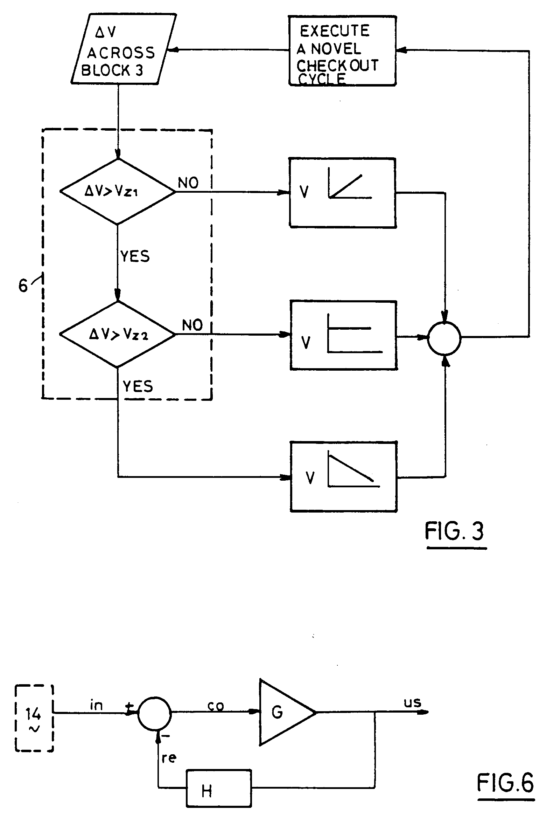

The voltage difference ΔV which is present across block 3, is constantly detected by block 6 and regulated through the action of the logic for regulating the voltage (block 5). When ΔV drops below a certain value VZ₁ (see Figs. 2 and 3) block 6 reports such condition to the regulating logic of the voltage which will command an increase of the same supplied by block 1. Conversely, when the value ΔV attains the value which corresponds to Vz₂ (maximum allowable voltage) block 6 provides, in analogy to what precedingly described, to operate a voltage decrease whereby the value ΔV is reported within the safety limits. Such system, as already mentioned allowes an increase of the welding apparatus efficiency.

It has also been feasible to compensate in a totally automatic way the voltage drops which originate from the line resistances, the resistance of the piece to be welded being included.

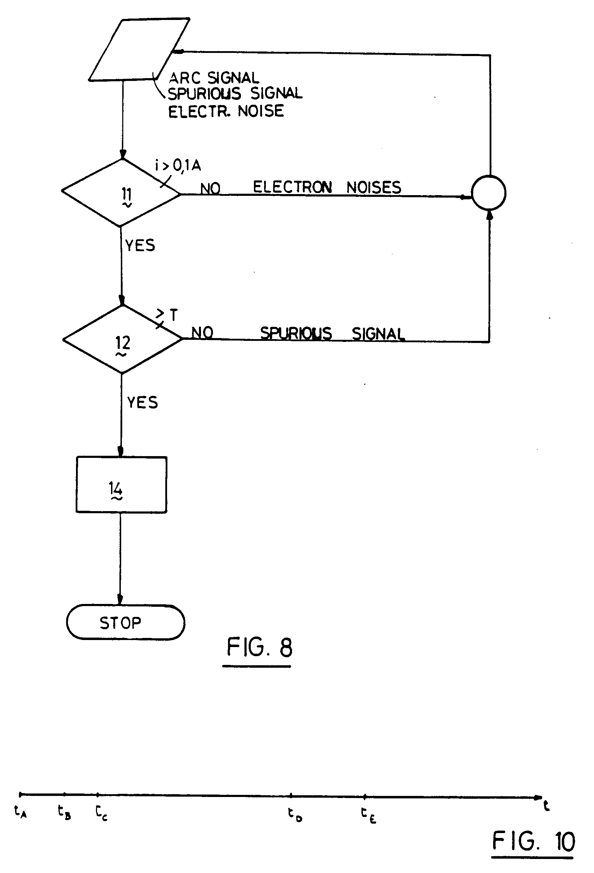

The weld current detector, block 11 has the purpose (fig. 8) of sending a signal to the noises discriminator (block 12) when through the weld circuit flows a current higher than 0,1 A; the latter transfers to the weld programmer (block 14) the warning that the weld cycle has been initiated. The programmer is then enabled to start the development of the previously laid down program.

The noise discriminator (block 12) is a "filter" for unwanted signals of various types and sources, whereby the programmer is made insensitive for said signals.

### CONTROL OF CURRENT FOR PROTECTING THE MIXER

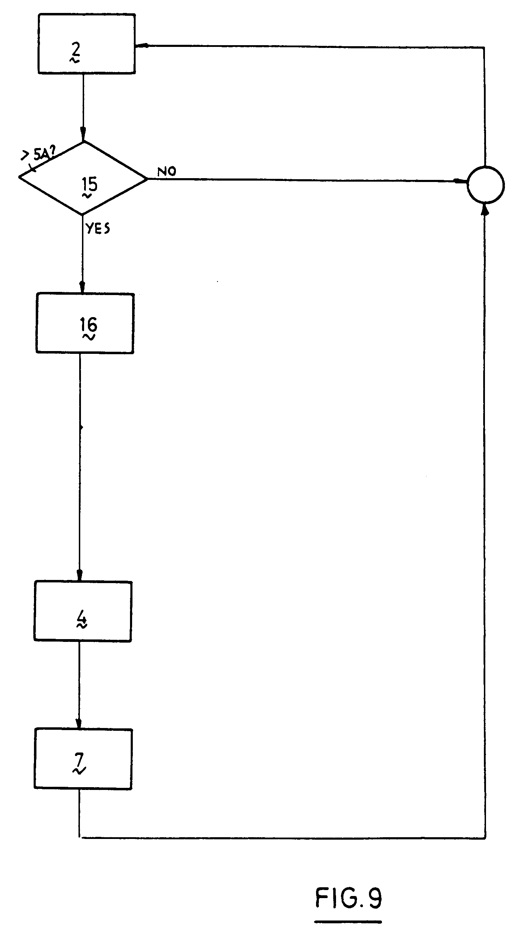

As previously shown the mixer (block 4) is protected against too high values of weld current by a control system which operates according to the logic illustrated in fig. 9:
the detector of the arc current, block 15, when the voltage signal reaches it from meter 2 of the current, through timing relay 16, activates relay 9 which short-circuits mixer 4 whereby the HT generator is disabled. Timing relay 16 has been inserted for delaying the above described intervention and in addition, for allowing the superposition of the HT and of the welding current when initial values of current are present higher than 5A.

In this way the superposition is ensured of the high voltage generated by block 7 on the current which comes from block 3 in conditions only of particular criticalness caused by arc currents lower than 5A.

For greater currents, for which the constant permanent presence of the high voltage is not necessary, the mixer is shunted by the relay.

It is to be noted that the above is possible because the related decrease of voltage drop along the line which occurs when the bank of diodes is short-circuited, is readily compensated by the system reaction.

### GENERATOR OF CURRENT

In order to optimize the electric efficiency, it has been resorted as current generator, (block 1) to a generator which comprises Tn transformers and relates rectifiers with automatic control of the current regulator voltage in such a way that such voltage is maintained within safety limits. As already mentioned, when the voltage exceeds one of the two thresholds VZ₁ and VZ₂ (Fig. 2) the regulating system provides to report such voltage within said limits through the connection at the time tI or the disconnection at time tII of transformers Tn of block 1.

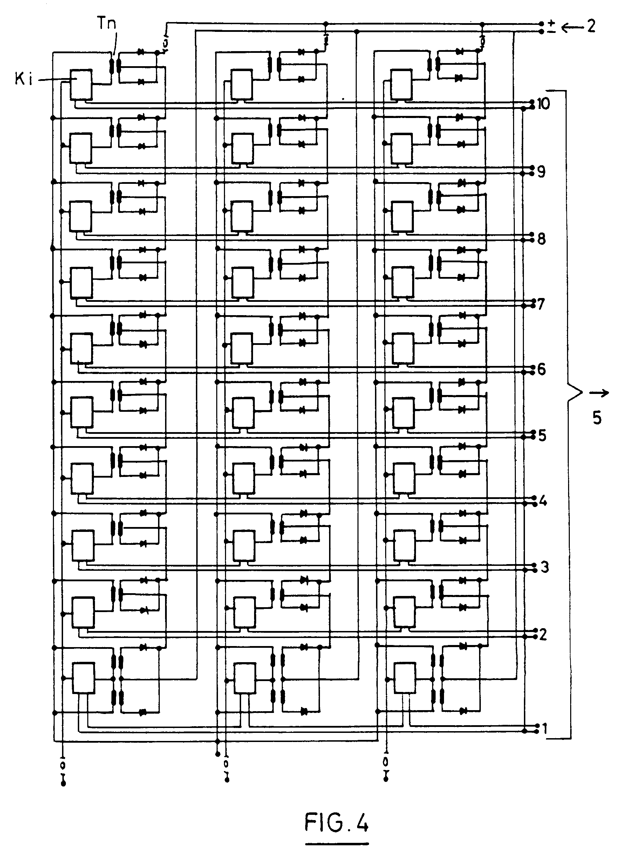

As it is seen in detail in Fig. 4 such block comprises three single-phase units located in parallel. Each unit comprises a series of transformers Tn separately controlled by relays Kn and rectified by a double diode.

The above permits an optimum expoiting of the current generator with the related increasing of the efficiency.

### CONTROL OF THE VOLTAGE

Let us consider now the flux diagram of fig. 3 which represents the logic through which the voltage generated by block 1 is adjusted.

Such adjustment occurs by drawing the voltage ΔV from across the current regulator and by comparing it with two voltages VZ₁ and VZ₂ . If ΔV < VZ₁ a logic circuit controls, through relays, the insertion of the transformers of block 1. If, on the contrary ΔV > VZ₂ , the same logic circuit intervenes for disconnecting the transformers of block 1.

If at last ΔV is included between the two voltages VZ₁ and VZ₂ the control logic is insensitive whereby the configuration of block 1 is set unchanged.

From Fig. 4 it is observed how the action of relay K_{i=1,2,...10′} succeeds in connecting / disconnecting the transformers of current Tn with a consequent increase/decrease of the adjusted voltage.

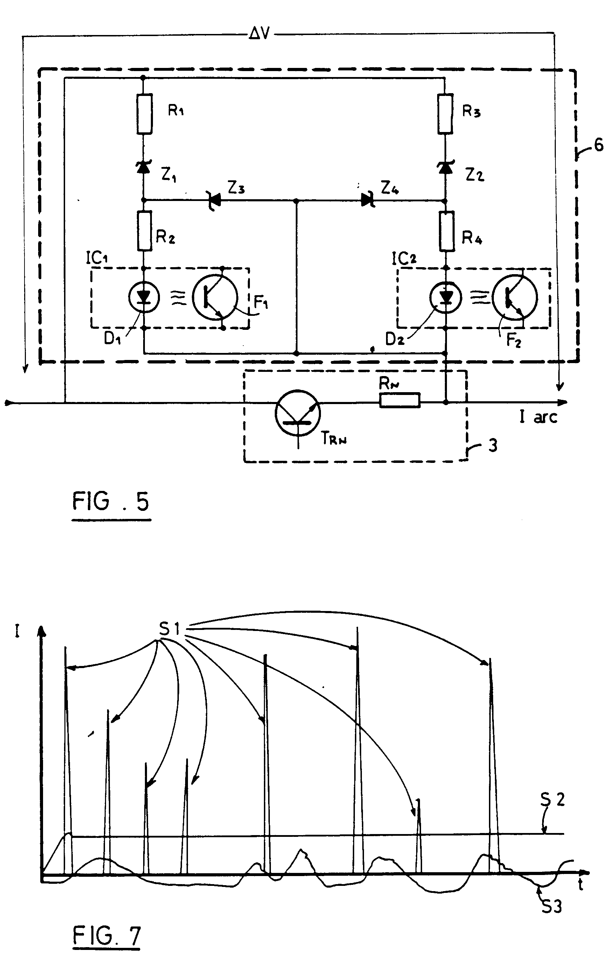

In Fig. 5 the circuit is reported in principle which realizes in practice the two decisional units of block 6 which are reported in the logic diagram of fig. 3.

The two units are comprised of two photocouplers which are marked by initials IC1 and IC2 which are connected respectively in series with R1, Z1, and R2 for the first one and R3, Z2, R4, for the second one.

When ΔV assumes such values which are higher than the Zener voltages, the related branches are conducting whereby the leds D1 and D2 inside the photocouplers IC1 and IC2 will emit and excite the phototransistors F1 and F2.

By the managment of the signals which come from last named components, which management is made by block 5, the value of ΔV is adjusted within predetermined values.

On purpose of preventing the generation of electric and electromagnetic noises caused by connection and disconnection of the relays, static relays are used for piloting transformers Tn which static relays are suited for inductive charges which provide the detection of the passage through zero.

### CONTROL OF THE CURRENT

On purpose of ensuring an arc current of which the power is equal to the value requested by the user, it has been necessary to provide for the feeding system a device adapted for compensating in real time, the possible variations of current caused by the not presumable impedance of the arc.

Such system is characterized by:
1) high exemption from outer electromagnetic noises.
2) Low response times
3) Limited unstability lower than 10 percent also for currents of very small value.

In particular, both the continuous variations of voltage, as produced by the generator of variable voltage (block 1 ) and the unknown resistances of line which are comprised also of the intrinsic resistances owned by the object to be welded (for instance thermoelectric wires of small diameter and remarkable length) are automatically compensated. Obviusly as already mentioned, the system suitable compensates also the impedance fluctuations of the arc.

The philosophy of regulation is characterized by a counterreaction logic. The diagram of fig. 6 where H corresponds to block 2 and 9 corresponds to blocks 8 and 3, shows how at the command of the current "in" coming from block 14 the signal "re" which comes from the converter current - voltage is deduced. A current variant which is extraneous to the command that comes from the program, causes a stress of opposite sign due to signal "co".

On the contrary, when a variation of the inlet "in" is present, this causes a proportional variation of the outlet "us" signal, In stational conditions the ratio of signal "in" and of signal "re" is constant.

### CHECKING THE START OF THE PROGRAM

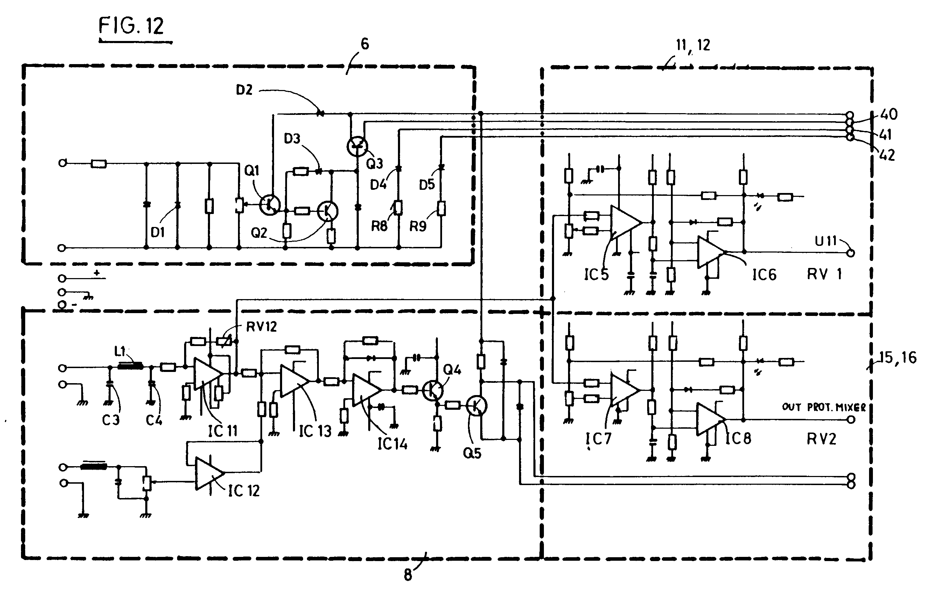

Blocks 11 and 12 comprise the system for detecting the welding current. They correspond to the detecting device RV1 of the welding current of fig. 12. To that device the task is conferred of transmitting to the weld programmer the time command for starting the program; after this, the behaviour of the current will evolve according to the laid down parameters.

In order to correctly develop 18 its own function, the device is subtantially characterized by a high immunity from the following spurious signals which would in fact altered the behaviour of the arc current which would imply the initial portion of the welding cycle. In the case in point, one of the most frequent sources of noise occurs when the electrodes have not suitable geometries or when the same are not perfectly clean. Analogous spurious signals are produced when the argon flux is not properly adjusted or when in such gas inpurities are contained.

The characterisation of the wanted signals through analyses which are carried out by measure instruments has permitted to evidence their differences from those produced by the usual flux of the arc current.

In fig. 7 exemplifying graphs are reported of the spurious signals, of the weld signal (characterized by an arc current equal to 200 mA) and of the signal originated by the thermal stirring of the electronic components (electron noise).

Table 1 describes the origin and reason of the signals S1, S2, S3 illustrated in figure 7.

Table 1 follows:

**TABLE 1**

| **SIGNALS** | **ORIGIN** | **CAUSE** |
|---|---|---|
| **S1** | Discharges of the parasitic capacities distributed along the connections of the electrodes but without any "lightning" of the power arc (very low energy content) | A) Electrodes distance |
| | | B) Electrodes geometry |
| | | C) Electrodes cleaning |
| | | D) Argon flux |
| | | E) Argon impurity |
| **S2** | Arco current 200 mA (chosen value because it is one of the more critical included within the range of the welding apparatus) | ELECTRODES; |
| | | DISTANCE; |
| | | ARGON. |
| **S3** | Electron noise of the components (resistors, integrated, transistors, condensers) | Thermal stirring |

The big difference among the various types of signals has permitted an efficient discrimination for the right command of starting the cycle of weld.

As seen from the flux diagram of fig. 8, the signal is sent to two decisional systems located in series: if it succeeds in overcoming the series the weld programmer, block 14, receives the starting command.

The first decisional system comprises block 11 the signal of which is compared to a voltage equal to the value which is higher than that attainable by the electron noise. When the signal overcomes that voltage, block 11 sends a positive voltage to block 12.

The second decisional system comprises block 12 which provides, through relay 9 a starting signal to the weld programmer only when the inlet signal lasts more than the laid down time t. Therefore when spurious pulses are present, the system remains not sensitive whereby relay 9 is not energized and on outlet U11 no signal is generated (fig. 12).

According to the present invention a checking is provided of the opening of the argon electrovalve which checking is described hereinafter. The purpose of such checking is for ensuring both the washing of the weld volume in advance that the same has started and for allowing at the end of the weld the cooling in an inert ambient.

Therefore it is interesting to predispose two timing delay steps: one of them preceding the starting of the program evolution, the other one succeding after the same program.

The subdivision of the times and the related actions displayed during the respective time lapses appear as it follows:
- t_{A} - t_{B}:: washing of the weld volume (adjustable)
- t_{B} - t_{C}:: HT begins while waiting the power arc
- t_{C} - t_{D}:: weld program
- t_{D} - t_{E}:: cooling of the work piece (adjustable)

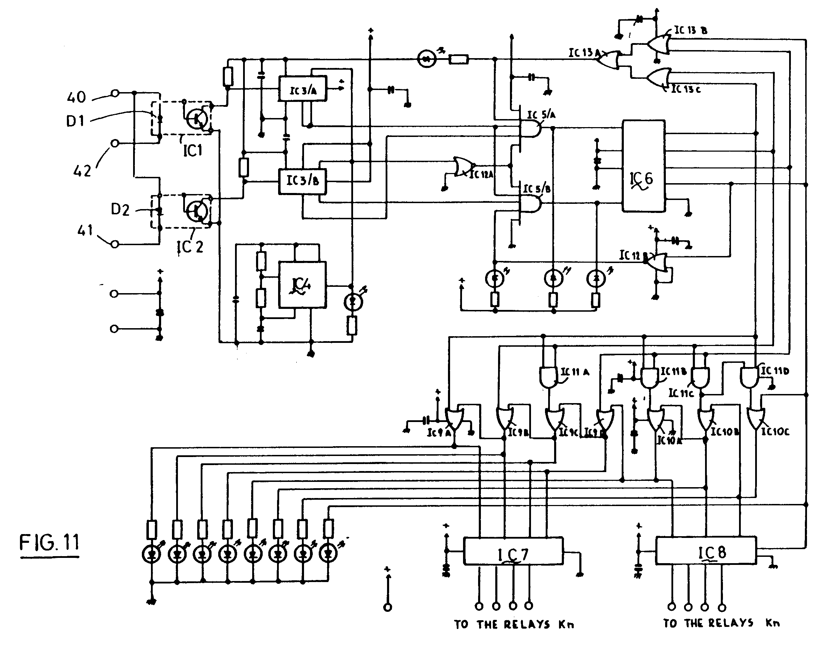

When the weld program is started, (fig. 10), at the time t_{A}, a timing relay, which is contained inside block 14 energizes electrovalve 10 through a relay.

At the instant "t_{B}", programmer 14 commands relay 9 which supplies the HT generator whereby the arc is made to dart. At the instant "t_{C}" the evolution begins of the weld program which ends at the instant "t_{D}".

During the time interval "t_{D}" - "t_{E}" the argon efflux lasts whereby the cooling of the piece in inert ambient is allowed.

Finally at the instant "t_{E}" the timing delay, through a relay, commands the shutting of electrovalve 10 whereby the argon flux is interrupted.

With reference to figure 4, the variable voltage generator block 1, is now described.

This being supplied by a three-phase voltage, comprises three single-phase units located in parallel. Each unit comprises a series of trasformers Tn singularly controlled by relay Kn and rectified by double diode.

As seen in fig. 1 connection of the various relays causes the related connection of the transformers of the three phases.

The maximum attainable voltage is about 100 V when all the transformers are connected.

The output of this device supplies, through block 2 by which the current is measured, the regulator of current 3.

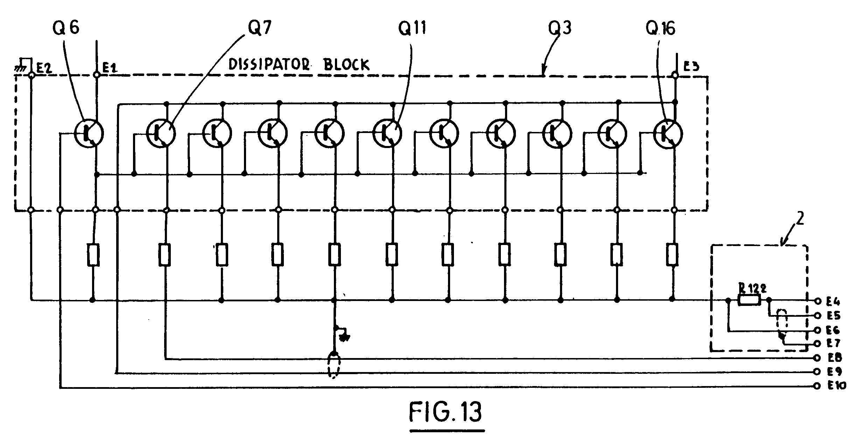

In practice, block 2 is a resistor of 1,2 m Ω across which the voltage drop is drawn which serves for reacting the system (fig. 13).

The control circuit of the ΔV is now described in its details.

The voltage across the current 3 regulator is drawn and applied to the control circuit ΔV of which the logic operation had been illustrated previously with reference to the principle diagram of fig. 5. In the embodiment illustrated in fig. 12 it comprises three transistors Q1, Q2 and Q3 which pilot two branches in parallel which comprise, respectively the first one a resistance R8, a Zener diode D4 and a led D2 of the photo-couplex IC2 and the second one a resistor R9, a diode D5 and the led D1 of the photo-coupler IC1; When the two branches lead, the leds energize the respective photo-transistors which are optically coupled.

The single phototransistor because it becomes conductor, puts in logic state "o" the corresponding inlet CD of the double flip-flop IC3, (fig. 11).

Three operating situations can occur for which hereinafter the related logic situation is described.
I both the photo-transistors are conducting
II a phototransistor is conducting and the other is non-conducting.
III both the phototransistors are non conducting.

In situation I the clock which comes from the oscillator IC4 can command the counter IC6 to descend. The decodification (integrals IC9, IC10, IC11) through pilot circuits IC7 and IC8 commands the disconnection of some transformers Tn until the voltage ΔV will reach a value which is intermediate between the two thresholds VZ₁ and VZ₂ for which the logic is not sensitive.

In the same way, if the ΔV descends below value VZ₁ (case III) both the phototransistors are nonconducting and the clock can command the counter IC6 to raise.

In situation II the counter IC6 is blocked and consequently the situation is stationary and so it remains until the situations I and III occur. The counter IC6 has been equipped with two limit-switches a upper one and a lower one.

The control of the welding current is entrusted to block 8 "conditioner and pilot" illustrated in fig. 12.

The signal drawn through block 2 which comprises the resistor R122 of fig. 13, of which the value is 1.2 mΩ, is sent to integral IC11 through a low-pass filter, (C3, L1, C4). This filter blocks the possible radiofrequency noises. The IC11 has a gain which can vary from 10 to 1000 which can be regulated through the semifixed RV12. As can be seen in fig. 12 the outlet of IC11 is connected with the inverting inlet of IC13 on which a reference voltage is further connected which comes from IC12.

The operational IC13 has a unitary gain, the signal which is the difference of the inlets of IC13 is amplified by the IC14 according to a factor 30 and carried to the base of Q4. Transistor Q4 amplifies such signal and through transistor Q5 pilots the dissipation block 3 (fig. 13) which comprises a pilot transistor Q6 and a series of final transistors Q7-Q16.

With the due intervention of such transistors the arc current is modified which being converted into voltage by block 2 permits the start of a novel regulation ring.

When the input voltage is varied, IC12 supplies IC13 with a different reference voltage whereby a relative and proportional variation is obtained of the arc current. In stationary conditions the ratio input-voltage / block 2 - voltage is constant.

Still with reference to fig. 12 the voltage signal of the current meter (block 2) reaches detector RV2 of the arc current which corresponds to blocks 15 and 16 of fig. 1. If the current of block 2 overcomes the threshold of 5A for more than a predetermined time, for instance a second, RV2 energizes the relay of block 9 whereby as already stated the current shunt and the extinction of HT generator 7 are caused.

The timing delay IC8 (block 16) which is inserted in this control chain serves for delaying, as formerly seen, the intervention of the relay and allowing the superposition of HT to the weld current when initial values of current are present higher than 5 A whereby the striking of the arc is allowed.

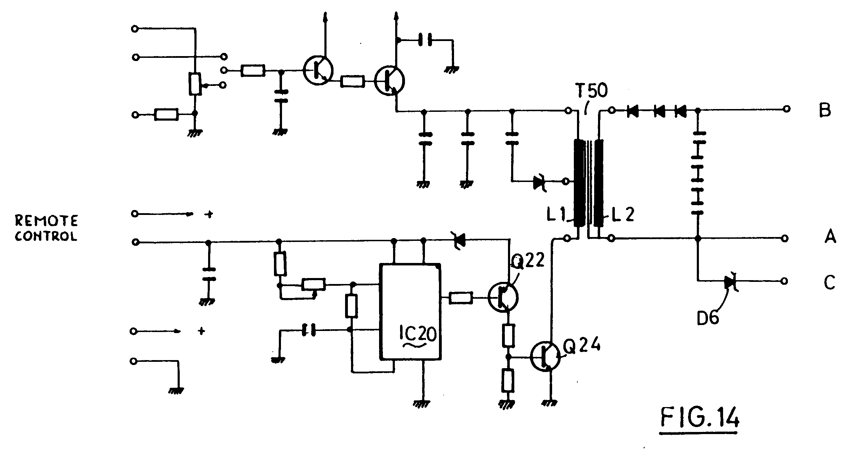

As can be seen in fig. 14, HT (block 7) has been generated by a multivibrator which comprises the integrated IC20, of which the outlet is amplified by a tandem of transistors Q22, Q24 of which the loading is a transformer T50 the nucleus of which is made of ferrite.

The windings L1 and L2 respectively comprise: L1 fourty turns of enameled wire side by side 1mm dia; L2 made of a HT winding differently used as line transformer in portable TV BN

The circuit permits to effect argon ionizations of current values included between 0,1 and 30 A. Such circuit is provided with such regulations which are effective for changing the power of the H.T. arc.

The purpose of Zener D6 is for disturbing the return of voltage peaks originated by the HT in circuits which are located in advance of the welding electrodes.

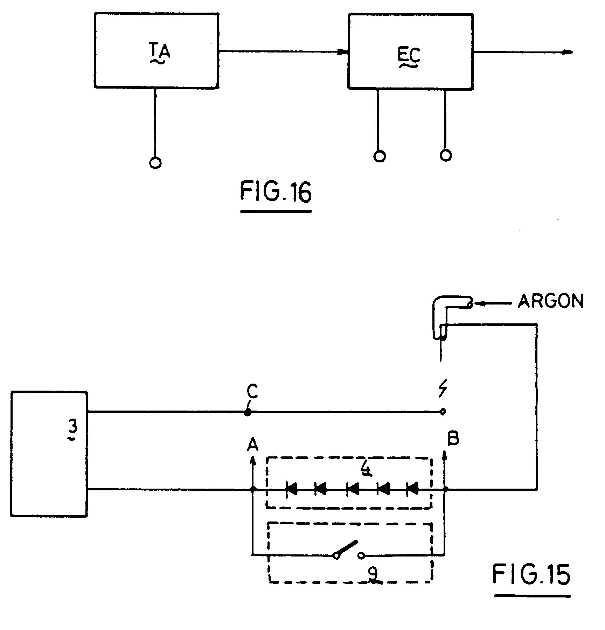

In fig. 15 the connection is reported of the HT generator in the power circuit.

The so generated HT is mixed with the welding current through a bank of diodes (block 4).

The programmer (block 14) provides for piloting the weld current. It is realized through analogic technology and is an alternative to the computer. It is substantially subdividable in two portions shown in the block diagram of fig. 16:
a timing delay TA of the argon inflow which lays down the prewashing and afterwashing times;
a circuit EC for laying down and evoluing the current and the times whereby the both the values of current and the program times are programmed.

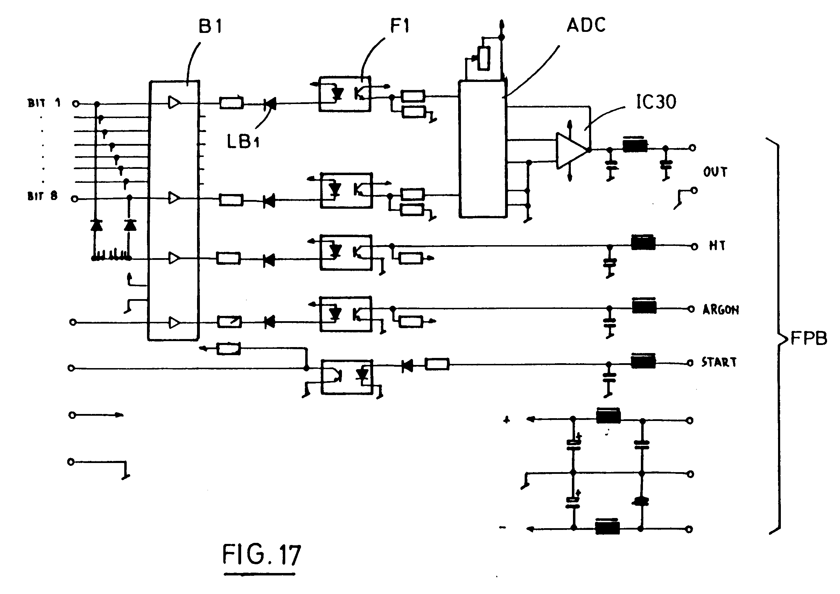

With reference to fig. 17 the electron circuit of the interface is shortly illustrated.

This circuit can be subdivided into four functional blocks:
1) Outlet buffer block B1
2) Photocouplers block F1
3) Analog/digital converter (ADC) block
4) Antinoise filter block (FPB).

With reference to the mentioned function blocks it is noted:
1) The available current at the outlet of the computer does not suffice for piloting the inlets of the photocoupler circuits. For this reason it is necessary to interpose some amplifiers which are comprised by two integrates which make up the buffer block B1. The logic state of each outlet is visualized by a diode LBi.
2) The severe operation conditions of the weld apparatus consequent to the pertaining voltages, compel to use photocouplers which allow the galvanic separation of the computer and of the welding apparatus and to keep separate the masses of some circuits of the latter.
3) The "START" control differently from the other, is a control which originates from the welding apparatus and warms the computer that the welding cycle has been initiated.
4) The eight BiT1 - BiT8 inlets related to the eight bit which comprise the value of the laid down current, must be converted in an analog signal. Such function is displayed by circuits ADC and by operational amplifier IC30. Over pin number 6 of IC30 a voltage is present which is proportional to the digital value existing at the inlet of circuit ADC.
5) The connection has been necessary of low pass filters FPB for filtering spurious signals coming from various circuits of the welding apparatus.

A software has been developed for 2 trade personal computer such as the C64 EXECUTIVE, with the purpose of demonstrating how the piloting of the functions of the weld apparatus through a personal computer can be made.

Specifically, the menu organized planned software provides:
1) Graphic page acquiring
2) Graphic visualizing
3) Noting the graphic data
4) Data inlet from keyboard
5) Data sequence (video outlet)

From the above, clearly appear the peculiar characteristics of the so conceived welding apparatus: it is easy to be used, it is versatile, programmable and allows the operation repeatability and the certifying of the product.

Its employment field is very large in accordance with its intrinsic versatility.

In fact the current can uninterruptedly vary from about 200 mA to 30A whereby complicate evolvements are followed which are widely programmable.

The weld times can be laid down with an ample choice (from zero seconds up).

In the described embodiment the welding apparatus is provided with a closed ring regulating system where the regulated magnitude is the current. However it is obvious that possible alternatives and variants can be added which allow the adjustment of different magnitudes such as for instance the temperature of the workpiece.

The use of a PC (personal computer) for the checkout of the apparatus of this invention makes it feasible to add outer accessories such as for instance the stepping motors for positioning the work piece and the torch.

## Claims

1. An apparatus with digital control and optimized electric efficiency for the automatic arc welding protected by inert gas and comprising a means (1) for generating a variable voltage, a means (2) for measuring the current, a means (3) for regulating the current, a means (7) for generating high voltage, a mixer means (4) for mixing the striking voltage and the arc voltage, a means (14) for programming adapted for displaying various prefixable weld programs, characterized by the fact of further including a means (8) for conditioning the welding current with a feedback loop adapted for compensating in real time the possible variations of current produced by the variations of line impedance, said means (8) comparing signals from programmer means (14) with signals from current measuring means (2) and further including a means (5) for maintaining the voltage drop across the current regulator (3) within predetermined limits by piloting said variable voltage generator (1) with the purpose of compensating in a totally automatic way the voltage drops originated by the line resistances of the arc and of the article to be welded, and optimizing the exploitment of the current generator with the consequent increase of efficiency and decrease of thermal dissipation.

2. An arc automatic welding apparatus as claimed in Claim 1, characterized by the fact that said means (14) is a weld programmator with digital control which means receives a signal for starting the weld and pilots the welding current by imposing the evolution of the current as by the program which is laid down each time.

3. An arc automatic welding apparatus as claimed in Claim 1, characterized by the fact of further including in combination:
a means (6) for measuring the voltage drop across the current regulator (3);
a means (5) for maintaining such drop within predetermined limits by piloting said variable voltage generator (1) with the purpose of compensating in a totally automatic way the voltage drops originated by the line resistances of the arc and of the article to be welded;
a circuit for detecting the welding current for starting the program, which circuit includes a detector (11) of the welding current and a discriminator (12) of the noises adapted for warning of the occurred starting of the welding cycle while filtering the sparious and unwanted signals;
a means (14) for programming a digitally controlled weld which receives such signal of initiated weld and pilots the welding current whereby the evolution of the current is imposed as per the program which can be laid down each time;
a means (13) of control of the current for the protection of the mixer (4) which short-circuits said mixer when the welding current overcomes a prefixed value;
a means (8) for conditioning the welding current with feedback loop adapted for compensating in real time the possible variation of current caused by the line impedance variations, said means (8) comparing signals from programmer means (14) with signals from current measuring means (2);
a means (10) for commanding the inflow of argon the purpose of which is for ensuring the washing of the weld volume in advance of the welding cycle and the cooling in an inert ambient at the end of the weld.

4. An arc automatic welding apparatus as claimed in claims 3 and 4 wherein the programmer means (14) with digital control is an analog programmer.

5. An arc automatic welding apparatus as claimed in claims 3 and 4 wherein the programmer means (14) with digital control comprises a personal computer and an interface card which allows the talk between computer and weld apparatus.

6. An arc automatic welding apparatus as claimed in claims 1 and 4 wherein, in addition to the welding current, also the temperature of the work piece is regulated by means of a regulation system with closed ring originating from the temperature control of the work piece.

7. An arc automatic welding apparatus as claimed in claims 2 and 4 characterized by the fact that the variable voltage generator (1) comprises three single phase units, all in parallel, of which each includes a series of transformers (Tn) singularly controlled by static relays and rectified by a double diode, the connection or disconnection of said transformers being piloted by the control circuit (5) as a function of the voltage drop across the current regulator (3).

8. An arc automatic welding apparatus as claimed in claims 1-7 characterized by the fact that the weld programmator (14) is piloted by two decisional systems(11, 12) located in series, of which the first (11) compares the amplitude of the signal that comes from the current meter to a minimum predetermined threshold while the other (12) recognizes the true signal by discriminating the transitory noises on the basis of the signal permanence.

9. An arc automatic welding apparatus as claimed in claims 1 and 4 characterized by the fact that the conditioning circuit (8) of the welding current includes an amplifying chain which comprises operations amplifiers (IC12-IC14) and transistors (Q4-Q5), controllable by a pilot voltage which is programmable by an analog programmer or through a PC interface and counterreactioned by a voltage which is withdrawn from a shunt (R12) which measures the current.

10. An arc automatic welding apparatus as claimed in claims 2 and 4 characterized by the fact that the means (5) for maintaining the voltage drop ΔV across the current regulator (3) within predetermined limits includes two parallel branches which comprise resistors and semiconductors (D4-D5) photocouplers ( IC1, IC2) and a logic which comprises substantially an up-down counter (IC6), a time basis (IC4), decodifyers (IC9-IC11) and a pilot circuit (IC7-IC8) of the transformers (Tn).

## Patentansprüche

1. Vorrichtung mit digitaler Steuerung und optimiertem elektrischen Wirkungsgrad für das automatische Bogenschweißen, geschützt durch inertes Gas und mit einer Einrichtung (1) zum Erzeugen einer veränderbaren Spannung, einer Einrichtung (2) zur Messung des Stroms, einer Einrichtung (3) zur Regelung des Stroms, einer Einrichtung (7) zur Erzeugung von Hochspannung, einer Mischeinrichtung (4) zum Mischen der Zündspannung und der Bogenspannung, einer Einrichtung (14) zum Programmieren, welche sich für die Anzeige verschiedener voreingestellter Schweißprogramme eignet,
**gekennzeichnet** durch
eine Einrichtung (8) zum Aufbereiten des Schweißstromes mit einer Rückkopplungsschleife für das Ausgleichen möglicher Stromveränderungen, welche durch die Veränderungen der Längsimpedanz hervorgerufen sind, in Echtzeit, wobei die Einrichtung (8) die von der Programmiereinrichtung (14) ausgehenden Signale mit den von der Strommeßeinrichtung (2) ausgehenden Signalen vergleicht, und durch eine Einrichtung (5) zum Aufrechterhalten des Spannungsabfalls über die Stromregelungseinrichtung (3) innerhalb vorbestimmter Grenzen durch Steuern des veränderbaren Spannungsgenerators (1) zum völlig automatischen Ausgleichen der Spannungsabfälle, welche durch den Längswiderstand des Bogens und des zu schweißenden Gegenstandes hervorgerufen werden, und zur Optimierung der Ausnutzung des Stromgenerators, wobei das eine Steigerung des Wirkungsgrades und eine Abnahme des thermischen Verlustes zur Folge hat.

2. Vorrichtung nach Anspruch 1,
**dadurch gekennzeichnet,**
daß die Einrichtung (14) eine Schweiß-Programmiereinrichtung mit digitaler Steuerung ist, wobei die Einrichtung ein Signal zum Starten des Schweißens empfängt und den Schweiß-Strom durch das Programm, welches jedesmal bestimmt ist, durch Auferlegen der Stromentwicklung steuert.

3. Vorrichtung nach Anspruch 1,
**dadurch gekennzeichnet,**
daß sie ferner enthält:
eine Einrichtung (6) zur Messung des Spannungsabfalls über die Stromregelungseinrichtung (3);
eine Einrichtung (5) zur Aufrechterhaltung eines solchen Spannungsabfalls innerhalb vorbestimmter Grenzen durch Steuerung des veränderbaren Spannungsgenerators (1), wobei dies dazu dient, völlig automatisch die Spannungsabfälle, welche durch den Längswiderstand des Bogens und des zu schweißenden Gegenstandes hervorgerufen sind, auszugleichen;
einen Schaltkreis zum Erfassen des Schweiß-Stromes für das Starten des Programms, wobei dieser Schaltkreis einen Detektor (11) des Schweiß-Stromes und einen Rausch-Diskriminator (12) zur Warnung vor dem aufgetretenen Starten des Schweiß-Zyklus enthält, während die parasitären und unerwünschten Signale gefiltert werden;
eine Einrichtung (14) zum Programmieren eines digital gesteuerten Schweißens, die ein Signal eines angefangenen Schweißens empfängt und den Schweiß-Strom steuert, wobei die Entwicklung des Stromes durch das Programm, welches jedesmal bestimmt werden kann, auferlegt ist;
eine Einrichtung (13) zur Stromsteuerung für den Schutz der Mischeinrichtung (4), welche die Mischeinrichtung kurzschließt, wenn der Schweiß-Strom einen vorbestimmten Wert übersteigt;
eine Einrichtung (8) zum Aufbereiten des Schweiß-Stromes mit einer Rückkopplungsschleife, welche sich dazu eignet, die mögliche Veränderung des Stromes, die durch die Längsimpendanzveränderungen hervorgerufen wird, in Echtzeit auszugleichen, wobei die Einrichtung (8) die von der Programmiereinrichtung (14) ausgehenden Signale mit den von der Strommeßeinrichtung (2) ausgehenden Signalen vergleicht;
eine Einrichtung (10) zur befehlsmäßigen Steuerung des Zuflusses von Argon für die Sicherstellung des Waschens des Schweiß-Volumens vor dem Schweiß-Zyklus und der Kühlung in einer inerten Umgebung am Ende des Schweißens.

4. Vorrichtung nach den Ansprüchen 3 und 4,
**dadurch gekennzeichnet,**
daß die Programmiereinrichtung (14) mit digitaler Steuerung eine analoge Programmiereinrichtung ist.

5. Vorrichtung nach den Ansprüchen 3 und 4,
**dadurch gekennzeichnet,**
daß die Programmiereinrichtung (14) mit digitaler Steuerung einen Personal Computer und eine Interface-Karte enthält, welche die Kommunikation zwischen dem Computer und dem Schweißgerät ermöglicht.

6. Vorrichtung nach den Ansprüchen 3 und 4,
**dadurch gekennzeichnet,**
daß zusätzlich zu dem Schweiß-Strom auch die Temperatur des Arbeitsstücks mittels eines Reguliersystems mit einem geschlossenen Ring, welcher von der Temperatursteuerung des Arbeitsstücks ausgeht, reguliert ist.

7. Vorrichtung gemäß den Ansprüchen 2 und 4,
**dadurch gekennzeichnet,**
daß der veränderbare Spannungsgenerator (1) drei einzelne, parallel zueinander liegende Phaseneinheiten aufweist, von denen jede eine Reihe von Transformatoren (Tn) enthält, die einzeln durch statische Relais gesteuert sind und durch eine Doppeldiode gleichgerichtet sind, wobei die Verbindung oder Trennung der Transformatoren durch den Steuerschaltkreis (5) in Abhängigkeit von dem Spannungsabfall über die Stromregelungseinrichtung (3) gesteuert ist.

8. Vorrichtung nach den Ansprüchen 1 bis 7,
**dadurch gekennzeichnet,**
daß die Schweiß-Programmiereinrichtung (14) durch zwei in Reihe befindliche Entscheidungssysteme (11, 12) gesteuert ist, wobei die erste (11) die Amplitude des von der Strommeßeinrichtung kommenden Signals mit einem minimalen vorbestimmten Schwellenwert vergleicht, während das andere (12) das richtige Signal durch Absondern des vorübergehenden Rauschens auf der Grundlage der Signaldauerhaftigkeit erkennt.

9. Vorrichtung nach den Ansprüchen 1 und 4,
**dadurch gekennzeichnet,**
daß der Aufbereitungsschaltkreis (8) des Schweiß-Stromes eine Verstärkungskette enthält, welche Operationsverstärker (IC12-IC14) und Transistoren (Q4-Q5) aufweist, welche durch eine Steuerspannung steuerbar sind, wobei die Steuerspannung durch eine analoge Programmiereinrichtung oder durch ein PC-Interface programmierbar ist und ihr durch eine Spannung, die von einem strommessenden Nebenwiderstand (R12) abgenommen ist, entgegengewirkt wird.

10. Vorrichtung nach den Ansprüchen 2 und 4,
**dadurch gekennzeichnet,**
daß die Einrichtung (5) zur Aufrechterhaltung des Spannungsabfalls ΔV über die Stromregelungseinrichtung (3) innerhalb vorbestimmter Grenzen zwei parallele Zweige enthält, welche Widerstände und Halbleiter (D4-D5), Optokoppler (IC1, IC2) sowie eine Logik, welche im wesentlichen einen Vor-Rückwärts-Zähler (IC6), eine Zeitbasis (IC4), Dekodiereinrichtungen (IC9-IC11) sowie einen Steuerschaltkreis (IC7-IC8) für die Transformatoren (Tn) enthält, aufweisen.

## Revendications

1. Dispositif équipé d'une commande numérique et présentant un rendement électrique optimisé pour le soudage automatique à l'arc, avec protection par un gaz inerte, et comprenant des moyens (1) pour produire une tension variable, des moyens (2) pour mesurer le courant, des moyens (3) pour régler le courant, des moyens (7) pour produire une haute tension, des moyens mélangeurs (4) pour mélanger la tension d'amorçage et la tension d'arc, des moyens de programmation (14) adaptés pour afficher différents programmes de soudage pouvant être fixés à l'avance, caractérisé en ce qu'il comprend, en outre, des moyens (8) pour conditionner le courant de soudage avec une boucle de réaction apte à compenser en temps réel les variations possibles du courant provoquées par les variations de l'impédance de ligne, lesdits moyens (8) comparant des signaux délivrés par des moyens formant programmateur (14) à des signaux délivrés par des moyens (2) de mesure en courant, et en ce qu'il comprend, en outre, des moyens (5) pour maintenir la chute de tension aux bornes du régulateur de courant (3) dans des limites prédéterminées, par pilotage dudit générateur de tension variable (1), en vue de compenser d'une manière entièrement automatique les chutes de tension produites par la résistance de ligne de l'arc et de l'article à souder, et optimiser le fonctionnement du générateur de courant avec l'accroissement conséquent du rendement et la réduction conséquente de la dissipation de chaleur.

2. Dispositif de soudage automatique à l'arc selon la revendication 1, caractérisé en ce que lesdits moyens (14) sont un programmateur de soudage à commande numérique, lesquels moyens reçoivent un signal pour faire démarrer le soudage et pilotent le courant de soudage en imposant l'évolution du courant conformément au programme qui est prescrit chaque fois.

3. Dispositif de soudage automatique à l'arc selon la revendication 1, caractérisé en ce qu'il comprend, en outre, en combinaison :
des moyens (6) pour mesurer la chute de tension aux bornes du régulateur de courant (3) ;
des moyens (5) pour maintenir une telle chute dans des limites prédéterminées, par un pilotage dudit générateur de tension variable (1) dans le but de compenser d'une manière entièrement automatique les chutes de tension produites par les résistances de ligne de l'arc et de l'article à souder ;
un circuit pour détecter le courant de soudage pour faire démarrer le programme, lequel circuit comprend un détecteur (11) du courant de soudage et un discriminateur des bruits (12) adapté pour contrôler le démarrage exécuté du cycle de soudage tout en filtrant les signaux parasites et indésirables ;
des moyens (14) pour programmer un soudage commandé numériquement et qui reçoivent un tel signal de soudage déclenché et pilotent le courant de soudage, ce qui a pour effet que l'évolution du courant est imposée conformément au programme qui peut être chaque fois prescrit ;
des moyens (13) pour commander le courant pour protéger le mélangeur (4) t qui court-circuitent ledit mélangeur lorsque le courant de soudage dépasse une valeur fixée par avance ;
des moyens (8) pour conditionner le courant de soudage avec une boucle de réaction apte à compense en temps réel la variation possible du courant provoquée par les variations de l'impédance de ligne, lesdits moyens (8) comparant des signaux délivrés par les moyens formant programmateur (14) et des signaux délivrés par les moyens (2) de mesure du courant ;
des moyens (10) pour commander l'introduction d'argon, dont le rôle est de garantir le nettoyage du volume de soudure avant le cycle de soudage et le refroidissement dans une atmosphère ambiante inerte à la fin du soudage.

4. Dispositif de soudage automatique à l'arc selon les revendications 3 et 4, dans lequel les moyens formant programmateur (14) à commande numérique sont un programmateur analogique.

5. Dispositif de soudage automatique à l'arc selon les revendications 3 et 4, dans lequel les moyens formant programmateur (14) à commande numérique comprennent un ordinateur personnel et une carte d'interface, qui permet le dialogue entre l'ordinateur et le dispositif de soudage.

6. Dispositif de soudage automatique à l'arc selon les revendications 1 et 4, dans lequel, en plus du courant de soudage, également la température de la pièce à traiter est réglée au moyen d'un système de régulation en boucle fermée à partir de la commande de température de la pièce à traiter.

7. Dispositif de soudage automatique à l'arc selon les revendications 2 et 4, caractérisé en ce que le générateur de tension variable (1) comprend trois unités monophasées, toutes en parallèle et dont chacune comprend une série de transformateurs (Tn) commandés individuellement par des relais statiques et soumis à un redressement par une diode double, le branchement et le débranchement desdits transformateurs étant pilotés par le circuit de commande (5) en fonction de la chute de tension aux bornes du régulateur de tension (3).

8. Dispositif de soudage automatique à l'arc selon les revendications 1-7, caractérisé en ce que le programmateur de soudage (14) est piloté par deux systèmes décisionnels (11,12) branchés en série, dont le premier (11) compare l'amplitude du signal, qui arrive de l'ampèremètre, à un seuil minimum prédéterminé, tandis que l'autre (12) identifie sur la base de la présence permanente du signal.

9. Dispositif de soudage automatique à l'arc selon les revendications 1 et 4, caractérisé en ce que le circuit de conditionnement (8) du courant de soudage comprend une chaîne amplificatrice, qui comprend des amplificateurs opérationnels (IC12-IC14) et des transistors (Q4-Q5), pouvant être commandés par une tension pilote qui est programmable par un programmateur analogique ou par une interface d'ordinateur personnel et auquel est appliquée par contre-réaction une tension qui est prélevée d'un shunt (R12) qui mesure le courant.

10. Dispositif de soudage automatique à l'arc selon les revendications 2 et 4, caractérisé par le fait que les moyens (5) pour maintenir la chute de tension Λv aux bornes du régulateur de tension (3) dans des limites prédéterminées incluent deux branches parallèles qui comprennent des résistances des semiconducteurs (D4-D5), des optocoupleurs (IC1, CI2) et une logique qui comporte essentiellement un compteur progressif-régressif (IC6), une base de temps (IC4), des décodeurs (IC9-IC11) et un circuit pilote (IC7-IC8) des transformateurs (Tn).
